# EUROPEAN PATENT APPLICATION

(11) **EP 3 876 179 A1**
(43) Date of publication of application: **08.09.2021**
(21) Application number: 21159528.5
(22) Date of filing: 26.02.2021
(51) Int. Cl.: G06Q 40/00

(54) **NEW SYSTEM AND METHOD FOR RECLAIMING VALUE ADDED TAX FOR TOURIST/VISITORS ON THEIR PURCHASES AND FOR THE ZERO RATING OF VAT ON RETAIL EXPORTS LEAVING THE UNITED KINGDOM AND EUROPEAN UNION**

(30) Priority: 01.03.2020 GB 202002950
(71) Applicant: Marley, Philip, 15 Dublin (IE); Wilkey, Dana, 15 Dublin (IE)
(72) Inventor: Marley, Philip, 15 Dublin (IE); Wilkey, Dana, 15 Dublin (IE)

(57) **Abstract**

The system includes a processor. The processor includes a registration module to register a plurality of users on a centralized platform, a purchase order module which reads the receipts being uploaded by a tourist/service provider's device and outputs a purchase order on to the cloud based on the data extracted and preset programming, a good selection module configured to receive a list of goods. Further the processor includes several modules that make up the Commercial Export Evidence Engine that includes the packing list creator module configured to sync a first of images representative of the list of goods with the goods purchase receipt, an invoice generation module configured to generate an invoice in a pre-defined format for the destination location for the shopping completed in an jurisdiction along with populating an airway bill which contains the information of the boarding pass, a goods validation subsystem configured to receive a second set of images from the service provider/tourist from the destination location and compare them to the first set of images and upon verification that they are the same goods issue a shipment delivery receipt and arrival notice. A Payment module to pay VAT Refund to service provider/tourist. A track and trace module to track the service providers/tourist goods from purchase to export destination and all the events in between, all logged on a secured cloud and visible through an interface with the ability to drill down to the evidence of the event in each module.

## Description

### BACKGROUND

This invention relates in general to reclaiming value-added tax (VAT) and more importantly to a system and method for reclaiming VAT remotely. And for the zero-rating of VAT on retail exports leaving the United Kingdom and the European Union.

Value Added Tax (VAT) is a tax added on retail goods at the standard rate varying from a range of percentage across the globe. Overseas visitors, that being a tourist who is not established in a specific jurisdiction, are entitled to recover this VAT on leaving the same jurisdiction at a port of exit on all allowable purchases with no minimum sales value. The general rule is most goods purchased on a trip at that jurisdiction can have VAT recovered.

There are many approaches to recover the VAT. In a conventional approach, a mixture of both paper based and semi digitized systems are being used. The tourist's journey through the process generally starts in the retail store who provides refund documentation from a refund agent with whom the store has a contract. The tourist must then take the documentation from multiple stores and potentially multiple refund agents, collate it themselves and on leaving the specific jurisdiction, the documentation must be processed by a customs officer. The process is work intensive for the tourist, it requires quite a lot of administration and most importantly is very time consuming with queuing at refund desks in the airport and queuing again at customs. With so many moving parts, a lot can go wrong in the process for the tourist, making such an approach cumbersome. In such an approach, 1. Poorly trained staff at retailers often misadvise and fill out forms incorrectly and cannot issue business to business invoices. 2. During the course of a trip, tourists lose or misplace receipts or simply become confused as to which receipts go to which refund company. 3. Customs is not always available to stamp receipts and in situations such as this. Honesty boxes are used, and the tourist may never receive their VAT refund as this means that the documentation provided must be perfect in order to receive a refund. In the case where tourists leave their refund receipts and documents in the honesty boxes at airports, the paperwork often can get declined because the forms are not reviewed by customs before putting them in the box. Once in a the box, the forms incorrectly completed cannot be changed and therefore VAT reclaim will be denied with the tourist never knowing why this decline happened. 4. Many jurisdictions deal with verification of VAT refunds differently making a trip to many jurisdictions with shopping challenging to manage when it comes to getting the tourist VAT back. 5. All VAT refund companies to date do not have a long-term account relationship established with their users and also cannot track the transaction beyond the store experience and physical customs, so it leaves a gap for fraud to occur against tax authorities. 6. The burden of tracking VAT refund payments refunded on to the tourist credit cards is the responsibility of the tourist. In the conventional approach, the tourist never knows when their VAT refund will be credited to their credit card so they must keep checking for the credit to their account. They also are not always clear what their refund will be because there are so many different VAT Refund company rates of commissions. 7. Another problem in the conventional approach is the refund companies often charge far greater commission than is stated in their documents and tourists find it next to impossible to find out why the charges were higher. The tourist has no recourse to object or complain and demand that the terms of what they thought was agreed be honored.

In comparison to the conventional approach, some newer approaches recently have been developed using mobile and web applications to simplify the process of VAT reclaim. Such approaches allow tourists to scan receipts and digitally fill out forms for a later reclaim of VAT. However, such approaches failed to improve customer experience and failed to still deal with significant technical issues. The number one area of limitations of such an approach is the lack of the end to end digitization. The tourist at the end of the shopping trip has to find a way on holiday to print all of their receipts, scanned and keep the originals, then take that package and have the receipts stamped at customs thereby having the same issues faced in the conventional approach

Also, the latest digital operators in the VAT refund space are unable to get business to business invoices for purchases over 250 pounds and cannot expect tourists without the proper agreements to request the invoices from retail stores who's electronic point of sale systems do not have the capacity to issue such invoices. In these new technologies, they fail to successfully recover VAT for the tourist for purchasing exceeding 250 pounds.

Also, fraud issues are a constant concern for the traditional physical system of tourist VAT Reclaim and the hybrid physical and digital solutions that have emerged. There is a great difficulty for tracking purchases in multiple jurisdictions that are then exported through different countries all in one trip from beginning to end without issue and with accountability on all events in the transaction. And with Brexit impact in the United Kingdom allowing for a far greater level of VAT reclaim now from the European market, this will place significant pressure on border force and on customs, making it increasingly difficult to keep up with the demand for VAT capitals refunds from the UK tax authorities. Similarly, the European tax authorities will experience a significant increase in demand from UK visitors also seeking to recover VAT in the European Union jurisdiction.

Hence, there is a need for an improved system and method for reclaiming VAT and for the zero rating of VAT on retail exports leaving the United Kingdom and European Union to address the aforementioned issues.

### DRAWINGS

The disclosure will be described and explained with additional specificity and detail with the accompanying figures in which:
FIG. 1 is a block diagram representation of the transformation legally of the tourist accomplished through the system, and which events in the system initiates the transformation legally.
FIG. 2 is a block flow chart representation of configuration of different modules of FIG. 3 in accordance with an embodiment of the present disclosure; and
FIG. 3 is a flow chart representing steps involved in a method and system for reclaiming VAT in accordance with an embodiment of the present disclosure.
FIG. 4 is a diagram showing a sample trip by tourist using the system in three stores in three jurisdictions and structure of documentation and evidence captured and generated by the system.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### BRIEF DESCRIPTION

In accordance with one embodiment of the disclosure, a system and method for reclaiming VAT is disclosed. The computing system includes a processor. The processor includes a registration module configured to register a plurality of users on a centralized platform, wherein the plurality of users comprises one or more customers and one or more service providers. The processor includes a purchase order module configured to generate a purchase orders per store after reading an uploaded store/goods purchase receipt and credit card receipt by extracting the data from the receipt as programmed in the system through the tourists/disclosed agent's device and populating the system with this data. The processor also includes a good selection module configured to receive a list of goods to be exported from a source location to a destination location using a customer's device and are configured to sync a first purchased good image from source location with the good's purchase receipt using a packing list creator technique. Also, the processor includes a Commercial Export Evidence Engine which includes a Packing List Creator Module, Invoice Generation Module and Goods Validation Module. These modules generate through their unique processes in the system a packing list, commercial export invoice, house airway bill, shipping receipt and shipment delivery receipt as well as validation the goods have left the port of export using the tourist/disclosed agent's device. The processor also includes an Invoice Generation Module configured to generate an invoice in a pre-defined format for the destination location based on a pre-defined set of instructions and populate a compatible House Airway bill to go with the commercial zero-rated export invoice. The processor also includes a goods validation subsystem configured to receive a second set of images from the one or more tourist/service providers/disclosed agent from the destination location. The second set of images is representative of the list of goods exported from the source destination and to individually compare the second set of images with the first set of images to validate the list of goods being exported from the source location to the destination location are the same. The processor also includes a payment module configured to pay value added tax (VAT) for a pre-defined account upon completion of the export validation. Lastly, the Processor includes a track and trace module to see the location, date, time and evidence and unique mobile phone id that was present at each key event in each module listed above visually through an interface.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### DETAILED DESCRIPTION

For the purpose of promoting an understanding of the principle of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure.

The terms "comprises", "comprising", or any other variations thereof, are intended to cover a non-exclusive inclusion, such that a process or method that comprises a list of steps does not include only those steps but may include other steps not expressly listed or inherent to such a process or method. Similarly, one or more devices or sub-systems or elements or structures or components preceded by "comprises... a" does not, without more constraints, preclude the existence of other devices, sub-systems, elements, structures, components, additional devices, additional sub-systems, additional elements, additional structures or additional components. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

In the following specification and the claims, reference will be made to a number of terms, which shall be defined to have the following meanings. The singular forms "a", "an", and "the" include plural references unless the context clearly dictates otherwise.

Embodiments of the present disclosure relate to system and methods for reclaiming VAT and the zero-rating of VAT on retail exports leaving the United Kingdom and the European Union.

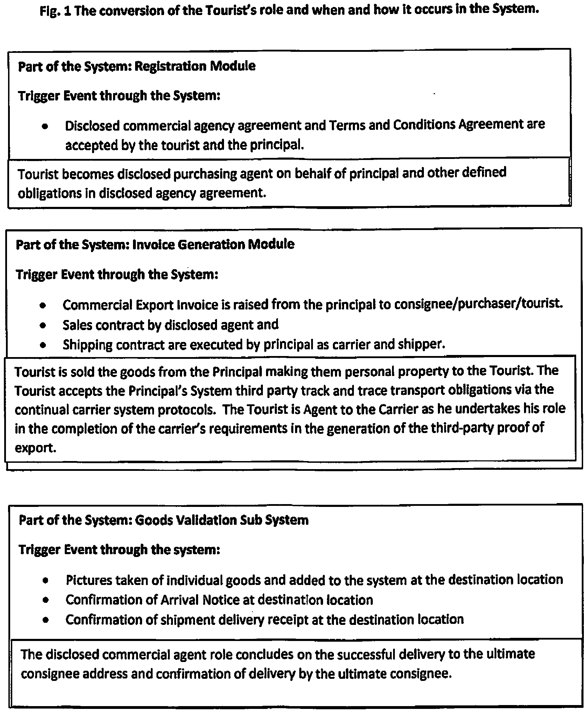

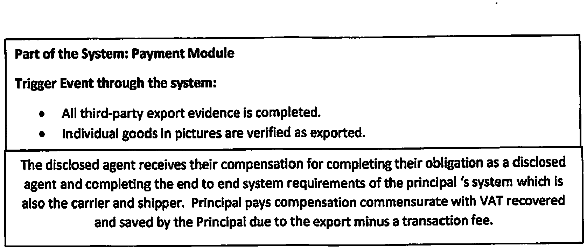

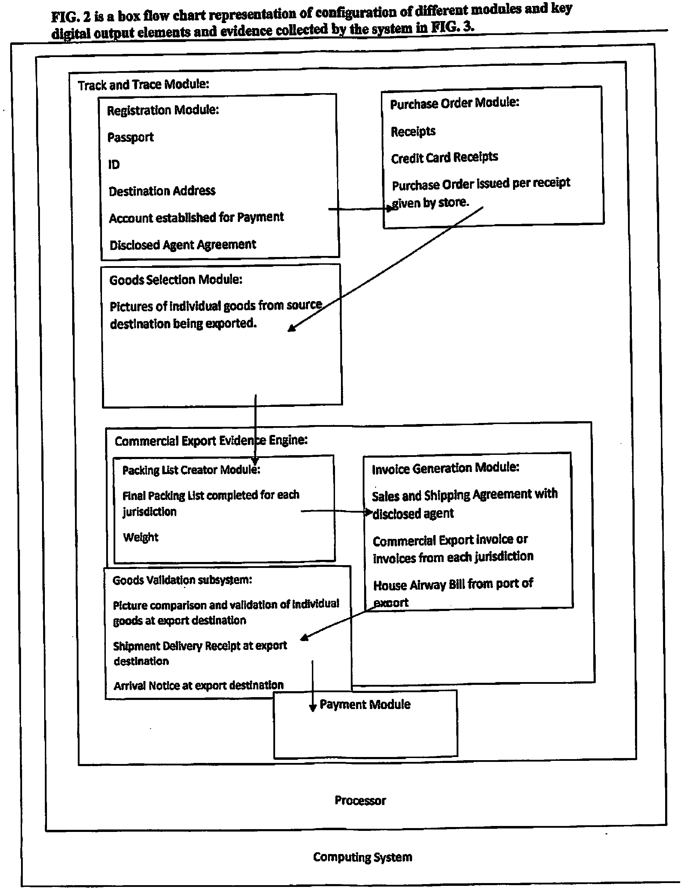

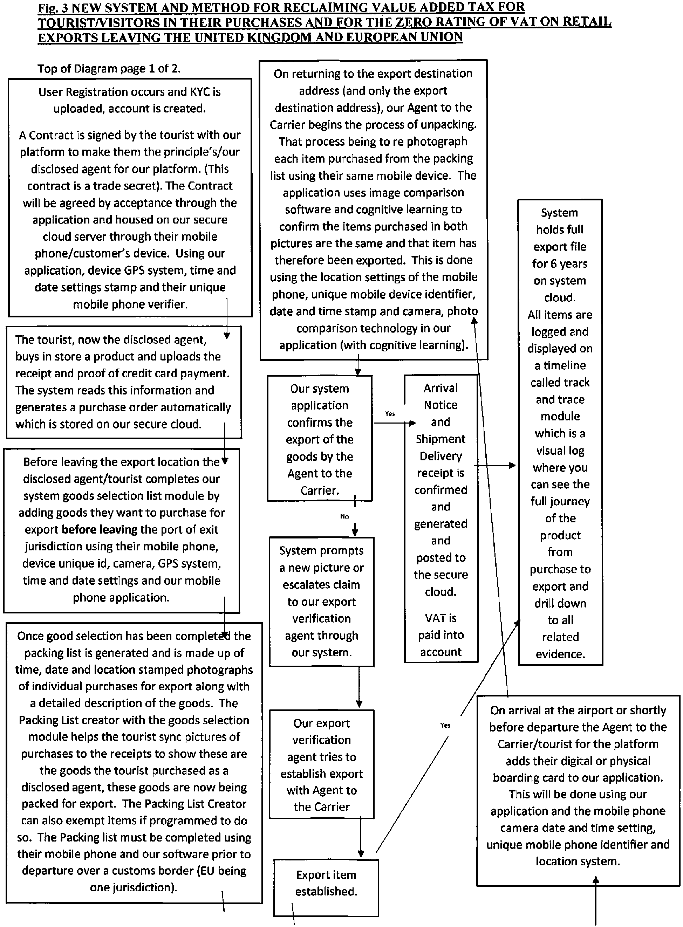

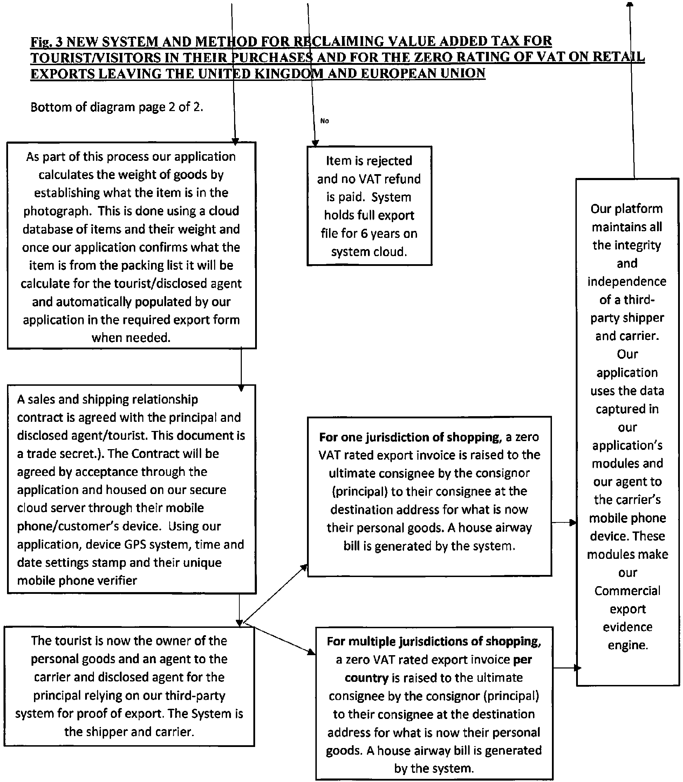

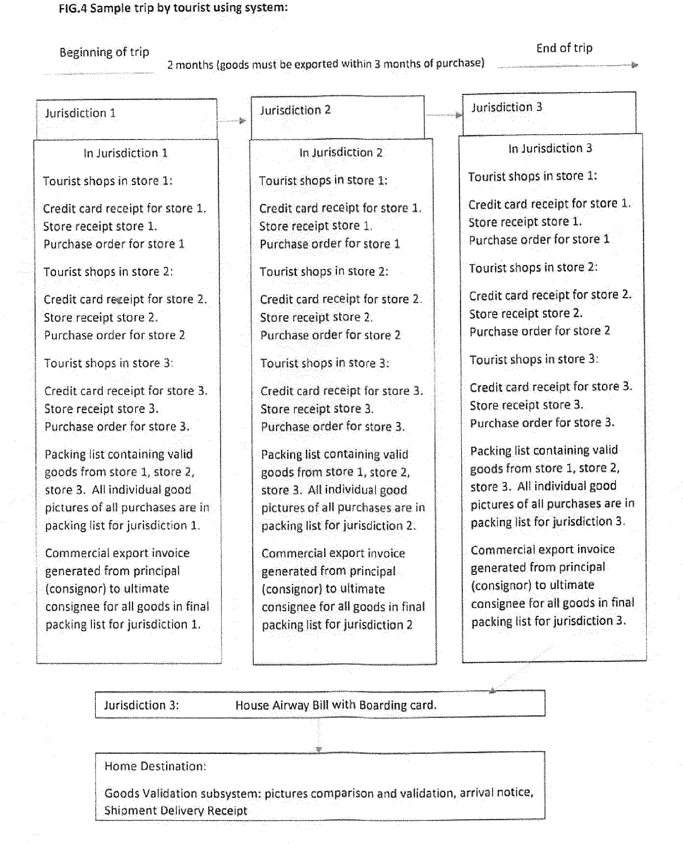

FIG. 1 is the transformation legally of the tourist role accomplished through the system and which events in the system initiates the transformation. Turning to FIGs 2 and 3, FIG. 3 is a block flow chart representation of a system to reclaiming VAT and for the zero rating of VAT on retail exports leaving the United Kingdom and European Union in accordance with an embodiment of the present disclosure. FIG. 2 is a block diagram representation of configuration of different modules of FIG. 3 in accordance with an embodiment of the present disclosure. The system includes a computer system including at least one processor. FIG. 4 is a block diagram showing a sample trip by tourist using the system in three stores in three jurisdictions and structure of documentation and evidence captured and generated by the system.

The processor includes a **Registration Module** to register a plurality of users on a centralized platform, wherein the plurality of users comprises one or more customers and one or more service providers. In one embodiment, the one or more service providers may include Disclosed Agents and an Agent to the Carrier.

The processor includes a **Purchase Order Module** using a customer's device, a purchase order is generated by the system per receipt based on the sale receipt and credit card receipt uploaded into the system by the tourist/service provider in the capacity of a disclosed agent for the principal. The purchase order is generated by the system based on the information the system extracts from the receipts and the criteria which is programmed into the system for the purchase order record. The receipts data are scanned and auto populated into the purchase order as programmed.

The processor includes a **Goods Selection Module** to receive a list of goods to be exported from a source location to a destination location using a tourist/disclosed agent/service providers device. In one embodiment, the user accepts and are legally bound to contracts that they are a disclosed agent and that they must follow a series of protocols in order to effectively work with the system to produce third party evidence of export for transport of the list of goods from the source location to the destination location as required. The source location is a country from which the goods are being exported from, and the destination location is the country and home address of the ultimate consignee. In such embodiment, the source location comprises a first jurisdiction location. In another embodiment, the destination location comprises a second jurisdiction location. In one exemplary embodiment, the customer device includes an application, a Global Positioning System (GPS), time and date settings, a unique mobile phone verifier or the like which is associated with the corresponding one or more users.

Furthermore, the processor includes a **Packing List Creator Module** to sync a first of images representative of the list of goods with a goods purchased receipt using a packing list creator technique. Then the goods that are entered into the packing list creator generates a packing list and a commercial zero-rated export invoice based on the list of goods and information gathered in the system and using the customer's device. A packing List is generated by the Packing List Creator Module per jurisdiction for the tourist/disclosed agent/service provider for each trip during a specified period of time, parameters of which are programmed into the system. In one embodiment, the packing list is made up of time, date and location stamped photographs of individual purchases for export along with a detailed description of the individual goods purchased. The packing list creator module syncs photos of individual goods with the store receipts to show these are the goods the tourist purchased as the tourist/disclosed agent/service provider for the principal from a retailer. These goods are now being packed for export from the source location. Also, the Packing List Creator Module may exempt one or more goods from the list of goods based on a pre-defined set of instructions if not being exported. As used herein, the term goods list is a standard document which accompanies a shipment. Also called a packing list, this document lists the products on a shipment along with packaging information but does not include prices. A final packing list is completed by the system for each jurisdiction upon departure of the port of exit by the tourist/disclosed agent/service providers per trip. A trip is defined as departure from home destination to one or more jurisdictions before returning to the home destination. Only purchases exported within three months of date of sale qualify for export. The Packing List Creator each time it is used populates through the system a **House Airway Bill** for the later departure from the port of exit by the tourist/disclosed agent/service providers.

The centralized platform will require from the tourist/disclosed agent/service providers all the information that would ordinarily be required for a House Airway Bill to complete the airway bill process in the system. The tourist's vessel number on departure, time and details of any intermediary stops will be extracted from the tourist/disclosed agent/service providers and their digital or physical boarding pass. More specifically, on arrival at the airport or shortly before departure the tourist/disclosed agent/service providers for the centralized platform adds a digital or physical boarding card to the platform. This is done using the mobile phone camera, date and time setting, unique mobile phone identifier and location system or a combination thereof.

Furthermore, on returning to the point of export, the tourist/disclosed agent/service providers destination location, the tourist/disclosed agent/service providers must then do the unpacking process and re-photograph the individual items captured using the Goods Validation Subsystem. The two different photographs of the same product will be compared by the system. To be specific, the photographs taken in the source jurisdiction while the tourist was there will be compared to the photos taken at the final export destination location. Once goods are exported the comparison of the individual photographs will be done through photo matching and cognitive artificial intelligence technique using the tourist/disclosed agent/service providers device and the system.

In one exemplary embodiment of the Packing list Creator Module, the processor includes a goods weight detection module to compute a total weight of goods to be exported where needed, wherein the total weight of goods is computed from the first set of images representative of the list of goods using an image processing technique. In one embodiment, the weight detection is achieved by the system establishing what the item is in the photograph. This is done using a cloud database of items and their weight on applying the image processing technique. Upon receiving a confirmation from the centralized platform, the goods weight detection module will be calculated for the tourist and automatically inputted by the centralized platform in the required export form in the system if needed.

The processor also includes an **Invoice Generation Module** to generate an invoice in a pre-defined format for the destination location based on a pre-defined set of instructions. In one embodiment, the invoice could be a commercial zero-rated export invoice generated because the consignor does not need to charge VAT to the consignee once that consignee lives outside of that VAT jurisdiction. This zero VAT rated export invoice may be raised by the central platform to the tourist/disclosed agent/ultimate consignee who is also an Agent to the Carrier to their destination location for what is now their personal goods. In another embodiment, a commercial zero-rated export invoice **per jurisdiction** may be raised to the tourist/disclosed agent/ultimate consignee who is also the Agent to the Carrier to the destination location for what is now their personal goods as stated above. As used herein, the term Agent to the Carrier is a person carrying their personal goods on behalf of the carrier and shipper who is present and tracking them through the disclosed third-party system as described herein on the Agent to the Carrier's device. A Commercial invoice is defined as a fundamental document for an international transaction with details including what goods are being shipped, who is the shipper, and who is the ultimate consignee.

Furthermore, the processor includes a **Goods Validation Subsystem** to receive a second set of images from the destination location, wherein the second set of images is representative of the list of goods exported from the source destination. On reaching the destination location, our tourist/disclosed agent/service providers/ Agent to the Carrier begins the process of unpacking the export goods that being to re photograph each item purchased from the list of goods exported from the source location using their device. The system uses its own image comparison software and cognitive learning to confirm the item in both pictures is the same and that item has therefore been exported from the source location to the destination location. This may be achieved using the location settings of the user device, unique mobile device identifier, date and time stamp, camera, photo comparison technology with cognitive learning. On arrival and acceptance of the pictures by the system compared and validated, the Agent to the Carrier has confirmed delivery to the ultimate consignee per legal agreement and an arrival notice is generated along with a delivery receipt by the system. An Arrival notice is a notification provided by the carrier when a shipment has arrived at the ultimate consignee. A delivery receipt is a document signed and dated by a consignee or their authorized agent confirming receipt of goods and stating the condition of the goods upon delivery. A consignee is the person or place to whom a shipment will be transferred. The ultimate consignee is the final recipient of the goods.

Once these images have been compared and verified by an algorithm in the goods validation system an **Arrival Notice** and **Shipment Delivery Receipt** are generated by the processor and stored to the cloud with other commercial shipping documentation and pictures and related data captured by the tourist/disclosed agent/service providers/Agent to the carrier device using mobile phone camera, date and time setting, unique mobile phone identifier and location system.

In another embodiment, the processor will also include a re-validation module to generate and transmit a command to the goods validation subsystem, wherein the command comprised instructions for capturing a new set of the second set of images if initial images are rejected based on the programmed test.

In one exemplary embodiment, the system further includes a storage unit operatively coupled to at least one processor. The storage unit stores one or more data associated with the Registration module, Purchase Order module, Goods Selection Module and the Commercial Export Engine modules including, Packing List module, Invoice Generation Module, Goods Validation Module and Payment Module from the process of goods to be exported from the source location to the destination location. In such embodiment, the storage unit will be a remote storage, wherein the remote storage comprises cloud storage. In one specific embodiment, the storage unit will store the export file details for 6 years.

In continuation, the centralized platform transforms the tourist/disclosed agent/service providers on the centralized platform into an Agent to the Carrier and allows the personal goods to be exported. The tourist/disclosed agent/service providers who are using the system appoints the principal of the system, as the shipping company to produce the necessary proof of export on the user's behalf which is done through the processor. The centralized platform uses the data captured in the modules listed herein and the Agent to the Carrier's device to through the system generate the required third party: packing list, commercial invoice, export house airway bill, shipment delivery receipt and arrival notice and the tourist's device information as well as it's own unique supplementary proof that the goods were exported through the Goods Validation Subsystem resulting in the Commercial Evidence of Export needed.

In one **example of use,** a tourist will arrive in UK and leave to home destination in Europe following Brexit, therefore will want to get their VAT refund for their shopping in the UK back. The tourist will download the application for registering on the centralized platform going through banking level "know your client" process to establish relationship, tourist's identity and most importantly their home address, which will become the destination location. The tourist will be given a payment method for receiving VAT refund. Further, the tourist will agree to the legal terms and conditions of the centralized platform and fully understand at the end of this process that they are a Disclosed Purchasing Agent for the system and that they are an Agent to the Carrier and Ultimate Consignee for the VAT refund and export system and have obligations there under. The centralized platform will generate a purchase order for the tourist/disclosed agent when a store receipt and scanned credit card payment receipt using their device is completed. The information on the receipts will be read by the system, extracted and populated into a purchase order on the system to the cloud, which has been preprogrammed to populate the system in a certain way. Once complete, the customer/tourist will pack their personal goods using the system and their device for export taking photos and adding the necessary descriptions if missing from the goods gathered for export in the UK. Weight will be estimated automatically using the system as needed as described herein. The platform will then generate and execute a sales and shipping contract using the tourist mobile device selling the goods purchased by them as disclosed agent to them as disclosed agent. Once Goods Selection Module and Packing List Module for the UK jurisdiction are complete using the system, a commercial zero-rated export invoice is generated by the system to the cloud between the principal and the disclosed agent/tourist. When the tourist adds their digital or physical boarding pass, a system house airway bill is generated by the system stating the necessary information of the carrier and shipper. This House Airway Bill is digitally signed and the information and proof of how the goods are leaving the port of export is captured. Once the Agent to the Carrier is back at their home or export destination and confirms their arrival and the state of the goods by taking a second picture of each good being unpacked, the goods validation module algorithms with picture comparison confirm it is the same goods that have arrived at the export destination with the same device used throughout the trip process. The Agent to the Carrier is transformed by the system into the Ultimate Consignee and an arrival notice and shipping delivery receipt are generated by the system all of which are store on the cloud as described herein. A payment is then made to the customer/tourist designated account of their VAT refund. As used herein, the term system house airway bill is defined as a contract of carriage enforceable by commercial law that is validated when signed by the authorized agent by both the shipper and the carrier and issued on a receipt of goods and provides instructions from the shipper to the carrier. The same individual or organization may act on behalf of both the carrier and the shipper and the airway bill can be signed by the representative of both and may be the same person in both signing sections. Also, the delivery receipt is a document signed and dated by a consignee or their authorized agent confirming receipt of goods and stating the condition of the goods upon delivery.

The system will have a secure track and trace module so that all of the above events in each module are tracked and traced on a log in the system to be reviewed and drilled down for related evidence as needed.

To prevent fraud, in addition to the KYC gathered by the system and track and trace module there will be algorithms that run on the data of the cloud to alert of any suspicious functioning of the system or purchasing behavior. If found the VAT refund will be held until certain audit procedures have been completed. There will be a web enabled system that will allow for all information recorded and reported on to be shared to the Tax and Customs Authority.

In one exemplary embodiment, time of supply of goods may be defined not when the tourist purchases the goods in the retail store, but at the time the centralized platform sells the goods to the tourist immediately after the goods list is complete. Only those allowable goods that are included on the goods list will be sold to the tourist. This transaction is executed prior to export so that the tourist is clear in leaving and is only allowed to leave with the goods when they are personal. Furthermore, the goods will be deemed to have been successfully exported when the backend of the centralized platform has recognized and matched the photographs, through the artificial intelligence system, the geo tracking and location verification and henceforth the tracking procedure is complete. At that point the export is deemed to have happened along with being verified with tourist device unique identifier.

In continuation, the tourist is only entitled to the VAT refund when the goods have been exported out of the EU or the applicable jurisdiction in a certain period of time (within three months), therefore proof of export in accordance with the systems rules must have been achieved in order for a VAT refund to be paid to the tourist.

Furthermore, varying roles in a credible manner will be achieved through the centralized platform. In order to achieve the same, the tourist will have to give certain accesses via their mobile device to the centralized platform in order to interface that the behavior is in line with the legal obligation such as having details of the credit card the tourists are going to use on behalf of the system. Having home address as the destination location, having access to the geo location through the unique mobile identifier of the tourist for tracking allowing them to successfully act as an Agent to the Carrier. Having access to the camera, time and date stamp data as output by the tourist's phone in order to prove the role as a Agent to the Carrier in the export. Most importantly, having the appropriate "know your client" information to make sure that the tourist is known to the principal on the centralized platform in order to represent the principal in so many roles as commercial disclosed agent and more importantly is an "eligible person" as regards to the reclaim of VAT and zero rating for an export sale.

Furthermore, the processor includes a payment module configured to pay value added tax (VAT) for a pre-defined account upon completing the validation.

FIG. 3 is a flow chart of the complete system description representing steps involved in a system and new method for reclaiming VAT remotely and for the zero rating of VAT on retail exports leaving the United Kingdom and European Union. in accordance with an embodiment of the present disclosure.

FIG 2. Is a box flow chart representation of configuration of different modules and key digital outputs and evidence collected by the system. The events the system tracks through the user's device even when it is off are included in the box labeled "Track and Trace Module", they are listed below.
a. The acceptance of the required agreements through the mobile phone application setting out the obligations and the roles in the process.
b. KYC documentation uploads.
c. Destination address.
d. Disclosed Agent Agreement.
e. Receipts uploaded issued by retailers read by system and data extracted
f. Purchase Order which is auto generated from extracted receipt data for the Principal to Retailer by system.
g. Picture before leaving jurisdiction of goods for export.
h. Commercial zero-rated export invoice generated by system for carrier and shipper for Tourist.
i. Boarding Card added to the System by Tourist.
j. House Airway Bill generated by system for carrier and shipper for Tourist.
k. Pictures taken of goods by tourist after leaving the port of export at destination
l. Shipment Delivery Receipt after goods are verified by system
m. Arrival Notice after goods are verified by system
n. Payment made of VAT Refund from principal to tourist/disclosed agent

The above events of tracking are very different to transport companies that use logistics technology and freight forwarding trucks, airlines and trains to track goods.

The main differences between the system and traditional methods can be summarized in that the tracking events are different, and the use of technological methods are different.

The system allows for legal borderless export without the involvement of customs in any jurisdiction because the retail goods being exported are personal property. The system also achieves that the application could be used in any retail store without a VAT Refund Company with a contract with the retailer.

Our Commercial Export Evidence Engine captures a picture of the actual good(s) before they leave the purchase jurisdiction and again after it arrives at its export destination. Our Commercial Export Evidence Engine compares the pictures taken in one jurisdiction to another to recognize:
a. It is the same item of export.
b. It is the same phone taking a picture of the same item and has been used throughout the process.
c. It is confirming the same item has arrived at the correct export address.
d. It is also is checking to see if the date and time of the picture correlates with the travel proof.

Furthermore, the system makes the Tourist/disclosed agent on our export platform into an Agent to the Carrier and allows the goods to be exported without going through customs. In addition, the system maintains all the integrity and independence of a third-party shipper. The Commercial Export Evidence Engine allows for the Tourist/customer /disclosed agent to prepare the goods list and commercial documentation using the system as a third-party proof of the export.

This novel method allows the third party to be the System itself with the Tourist acting as the Agent to the Carrier to carry with them their goods while recording the export sale and generating the third-party evidence of export using their mobile device.

Up to now, particularly to export goods tax free, everyone needed third party evidence of export with a freight forwarder or shipper, the Commercial Export Evidence Engine changes this and allows the third party to be our System itself with the tourist acting as ***our*** Agent to the Carrier to carry with them the goods while recording the export sale and generating the third party evidence of export using their mobile device. It is a green solution that allows for superb and unique record keeping capabilities. As used herein, the term Agent to the Carrier also termed as carrier is a party that transports goods for another person or company and is responsible for any possible loss of or damage to the goods during transport. A common carrier provides transportation services to the public in return for compensation. A contract carrier provides this service under special contracts, often for government clients.

Another huge improvement the system achieves is allowing the disclosed agent/tourist to shop in multiple stores in multiple locations and export their personal goods on one single packing list for each jurisdiction carrying their goods in in their own luggage free. Currently retailers organizing shipping requires the user to document each item in a separate process per store and different for each jurisdiction which is confusing and cumbersome and has additional costs.

The figures and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, order of processes described herein may be changed and are not limited to the manner described herein. Moreover, the actions of any flow diagram need not be implemented in the order shown; nor do all of the acts need to be necessarily performed. Also, those acts that are not dependent on other acts may be performed in parallel with the other acts. The scope of embodiments is by no means limited by these specific examples.

## Claims

1. A computer system comprising:
at least one processor comprising:
a registration module configured to register a plurality of users on a centralized platform, wherein the plurality of users comprises one or more customers and one or more service providers;
a purchase order module configured to read receipts content, extract the data and populate the system based on preset programming and generate a digital purchase order through a personal device.
a good selection module configured to receive a list of goods to be exported from a source location to a destination location using a customer device;
a commercial export evidence engine which is comprised of the modules below to provide a service provider through their device the ability to generate the third party proof of export and to legally carry their goods themselves by way of their device and the System across borders;
a packing list creator module configured to sync a first of images representative of the list of goods with a goods purchased receipt using a packing list creator technique.
an invoice generation module configured to generate an invoice in a pre-defined format for the destination location for a jurisdiction based on a pre-defined set of instructions;
a goods validation subsystem configured to:
receive a second set of images from the one or more service providers from the destination location, wherein the second set of images is representative of the list of goods exported from the source destination; and
compare the second set of images with the first set of images to validate the list of goods being exported from the source location to the destination location;
a payment module configured to pay value added tax (VAT) for a pre-defined account upon completing the validation.
A track and trace module that logs specified events on a secured cloud that are visible through an interface with the ability to drill down to the evidence of the event and how it was established for the purpose of fraud prevention and proving a transaction for VAT refund purposes from purchase to export by a tourist through their device in any jurisdiction.

2. The system of Claim **1,** wherein the plurality of user accepts a pre-defined contract to initiate the validation of the value added tax (VAT) for transport of the list of goods from the source location to the destination location.

3. The system of Claim **1,** wherein the source location comprises a first jurisdiction location.

4. The system of Claim **1,** wherein the destination location comprises a second jurisdiction location.

5. The system of Claim **1,** wherein the customer device comprises an application, a Global Positioning System (GPS), time and date settings and a unique mobile phone verifier associated with the corresponding one or more users.

6. The system of Claim **1,** wherein the at least one processor further comprises a goods weight detection module configured to compute a total weight of goods to be exported, wherein the total weight of goods is computed from the first set of images representative of the list of goods using an image processing technique.

7. The system of Claim **1,** wherein the at least one processor further comprises a boarding card module configured to add one of a digital boarding card or physical boarding card to the computing system based on one or more features.

8. The system of Claim **7,** wherein the one or more features comprises a date and time setting, a unique mobile phone identifier, a location system or a combination thereof.

9. The system of Claim **1,** wherein the at least one processor further comprises a re-validation module configured to generate and transmit a command to the goods validation subsystem, wherein the command comprised instructions for capturing a new set of the second set of images.

10. The system of Claim **1,** further comprises a storage unit operatively coupled to the at least one processor, wherein the storage unit is configured to store one or more data associated with the list of goods to be exported from the source location to the destination location.

11. The system of Claim **10,** wherein the storage unit comprises a remote storage, wherein the remote storage comprises cloud storage.

12. A method comprising:
registering, by a registration module, a plurality of users on a centralized platform, wherein the plurality of users comprises one or more customers and one or more service providers;
generating a purchase order by a purchase order module configured to read receipts content, extract the data and populate it based on preset programming and generate a purchase order through a disclosed agent's/tourist personal device to the cloud.
receiving, by a goods selection module, a list of goods to be exported from a source location to a destination location using a customer device;
syncing, by a packing list creator module, a first of images representative of the list of goods with a goods purchased receipt using a packing list creator technique, wherein the goods purchased receipt is generated based on the list of goods for each jurisdiction;
generating, by an invoice generation module, an invoice in a pre-defined format for the destination location based on a pre-defined set of instructions;
a commercial export evidence engine which comprises of the modules below to provide a service provider through their device to generate the paperwork to legally carry their goods but export the goods by way of a third-party system on their device.
receiving, by a goods validation subsystem, a second set of images from the one or more service providers from the destination location, wherein the second set of images is representative of the list of goods exported from the source destination to validate the list of goods being exported from the source location to the destination location are the same; and
paying, by a payment module, value added tax (VAT) for a pre-defined account upon completing the validation.
A track and tracing method to track the tourist goods from purchase to export destination and the events in between by a track and trace module that logs specified events on a secured cloud that are visible through an interface with the ability to drill down to the evidence of the event and how it was established for the purpose of fraud prevention and proving a transaction for VAT refund purposes from purchase to export by a service provider/tourist through their device in any jurisdiction.

13. The method of claim **12,** further comprising computing, by a goods detection module, a total weight of goods to be exported, wherein the total weight of goods is computed from the first set of images representative of the list of goods using an image processing technique.

14. The method of claim **12,** further comprising generating and transmitting, by a re-validation subsystem, a command to the goods validation subsystem, wherein the command comprised instructions for capturing a new set of the second set of images.

15. The method of claim **12,** further comprising storing, by a storage unit, one or more data associated with the list of goods to be exported from the source location to the destination location.
